# EUROPÄISCHE PATENTSCHRIFT

(11) **EP 3 516 580 B1**
(45) Veröffentlichungstag und Bekanntmachung des Hinweises auf die Patenterteilung: **08.12.2021**
(21) Anmeldenummer: 17769036.9
(22) Anmeldetag: 15.09.2017
(51) Int. Cl.: G06K 9/00

(54) **BEKÄMPFUNG VON SCHADORGANISMEN**
CONTROL OF HARMFUL ORGANISMS
LUTTE CONTRE DES ORGANISMES NUISIBLES

(30) Priorität: 22.09.2016 EP 16190062
(43) Veröffentlichungstag der Anmeldung: 31.07.2019
(60) Teilanmeldung: 21204536.3
(73) Patentinhaber: BASF Agro Trademarks GmbH, 67056 Ludwigshafen am Rhein (DE)
(72) Erfinder: RECHSTEINER, Daniel, 51063 Köln (DE); FOIS, Franco, 40789 Monheim (DE); HELLWEG, Sebastian, 51373 Leverkusen (DE); KIEPE, Björn, 34477 Mühlhausen (DE); JOHNEN, Andreas, 48167 Münster (DE)
(74) Vertreter: BASF IP Association
(86) Internationale Anmeldenummer: PCT/EP2017/073253
(87) Internationale Veröffentlichungsnummer: WO 2018/054767

(56) Entgegenhaltungen:
- US-A1- 2009 153 659
- Dennissprute ET AL: "Schädlingsmonitoring desT raubenwicklers durch Auswertungeiner Motten-Eiablage-Kartemittels Smartphone-Anwendung", LectureNotes in Informatics(LNI), 25. Februar 2016 (2016-02-25), XP055351698, Gefunden im Internet: URL:http://subs.emis.de/LNI/Proceedings/Pr oceedings253/201.pdf [gefunden am 2017-03-06]
- DING WEIGUANG ET AL: "Automatic moth detection from trap images for pest management", COMPUTERS AND ELECTRONICS IN AGRICULTURE, ELSEVIER, AMSTERDAM, NL, Bd. 123, 23. Februar 2016 (2016-02-23), Seiten 17-28, XP029491856, ISSN: 0168-1699, DOI: 10.1016/J.COMPAG.2016.02.003
- OTONIEL LÓPEZ ET AL: "Monitoring Pest Insect Traps by Means of Low-Power Image Sensor Technologies", SENSORS, Bd. 12, Nr. 12, 13. November 2012 (2012-11-13), Seiten 15801-15819, XP055352347, DOI: 10.3390/s121115801

## Beschreibung

Die vorliegende Erfindung befasst sich mit der Bekämpfung von Schadorganismen beim Anbau von Kulturpflanzen. Gegenstand der vorliegenden Erfindung ist ein System, ein Verfahren und ein Computerprogrammprodukt zur Ermittlung eines Befalls von Kulturpflanzen mit Schadorganismen.

Beim Pflanzenschutz ist das Ermitteln von Schadschwellen aus ökologischer und wirtschaftlicher Sicht unabdingbar.

Die Schadschwelle gibt die Befallsdichte mit Schaderregern, Krankheiten oder den Besatz mit Unkräutern an, ab denen eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall diesen Wert, werden die Bekämpfungskosten durch den zu erwartenden Mehrertrag zumindest ausgeglichen.

Je nach dem Wesen eines Schädlings oder einer Krankheit kann die Schadschwelle sehr unterschiedlich sein. Bei Schädlingen oder Krankheiten, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.

Die wichtigste Voraussetzung, um die Schadschwelle erkennen zu können, ist eine effiziente Befallskontrolle. Hierzu werden Fallen wie beispielsweise beleimte Farbtafeln oder Fangschalen verwendet, mit deren Hilfe Schadorganismen gefangen, identifiziert und ausgezählt werden. Bei Rapsschädlingen werden beispielsweise Gelbfangschalen verwendet, die mit Hilfe ihrer gelben Farbe die Schädlinge anlocken. Die Fangschale ist mit Wasser gefüllt, dem ein Tensid beigefügt wurde, um die Oberflächenspannung zu erniedrigen, so dass angelockte Schädlinge ertrinken. Im Fall einer beleimten Tafel bleiben die Schädlinge am Leim kleben.

Die Fallen werden regelmäßig kontrolliert. Durch Zählen der in einer Falle befindlichen Schädlinge lassen sich Schadschwellen ermitteln. Das Auszählen ist jedoch mühsam und fehleranfällig. Es ist denkbar, dass sich verschiedene Schadorganismen in einer Falle befinden, die unabhängig voneinander erfasst werden müssen, um für jeden einzelnen Schadorganismus den jeweiligen Befall feststellen zu können. Es ist denkbar, dass die Person, die die Fallen kontrolliert, nicht über eine ausreichende Schulung und/oder Erfahrung verfügt, um alle Schädlinge einwandfrei identifizieren zu können.

Dennis Sprute et al. offenbaren ein Verfahren zum Schädlingsmonitoring des Traubenwicklers durch Auswertung einer Motten-Eiablage-Karte mittels Smartphone-Anwendung (A. Ruckelshausen et al. (Hrsg.): Intelligente Systeme - Stand der Technik und neue Möglichkeiten, Lecture Notes in Informatics (LNI), Gesellschaft für Informatik, Bonn 2016, Seiten 201-204; http://subs.emis.de/LNI/Proceedings/Proceedings 253/201.pdf). Das Verfahren ist jedoch nicht dazu bestimmt und nicht geeignet, verschiedene Schadorganismen zu erkennen - es ist lediglich zum automatisierten Auszählen von Motten-Eiern gedacht.

Weiguang Ding und Graham Taylor offenbaren eine System zur automatischen Mottenerkennung anhand von Bildern von aufgestellten Fallen (*"*Automatic moth detection from trap images for pest management", Computers and Eleectronics in Agriculture, Bd. 123 (2016), Seiten 17-28).

In der Realität ist es jedoch oft mühsam, den Standort von aufgestellten Fallen wiederzufinden, da sich die Umgebung der Fallen beispielsweise aufgrund der stetig wachsenden Kulturpflanzen stetig ändern kann. Es ist denkbar, dass die Kulturpflanzen über die aufgestellten Fallen hinauswachsen, so dass die Fallen aus der Entfernung nicht mehr zu erkennen sind. Bei einer Inaugenscheinnahme der Fallen muss die entsprechende Person zunächst die Fallen wiederfinden.

Damit ergibt sich die technische Aufgabe, ein System und ein Verfahren bereitzustellen, mit dem der Befall von Kulturpflanzen mit Schadorganismen effizient ermittelt werden kann.

Erfindungsgemäß wird diese Aufgabe durch die Gegenstände der unabhängigen Ansprüche 1, 11 und 15 gelöst. Bevorzugte Ausführungsformen finden sich in den abhängigen Ansprüchen und in der vorliegenden Beschreibung.

Ein erster Gegenstand der vorliegenden Erfindung ist damit ein Verfahren zur Ermittlung eines Befalls von Kulturpflanzen mit Schadorganismen, umfassend die folgenden Schritte:
(A) Aufstellen einer oder mehrerer Fallen für die Schadorganismen in einem Feld, in dem die Kulturpflanzen angebaut werden,
(B) Erfassen des jeweiligen Standorts der einen oder mehreren Fallen,
(C) Wiederaufsuchen der einen oder mehreren Fallen anhand des jeweilig erfassten Standorts,
(D) Aufnahme eines oder mehrerer digitaler Bilder der in der einen oder mehreren Fallen befindlichen Schadorganismen,
(E) automatisiertes Identifizieren und Zählen der in der einen oder mehreren Fallen befindlichen Schadorganismen,
(F) Ermitteln einer oder mehrerer Befallsdichten der jeweils identifizierten Schadorganismen an den erfassten Standorten.

Ein weiterer Gegenstand der vorliegenden Erfindung ist ein System zur Ermittlung eines Befalls von Kulturpflanzen mit Schadorganismen umfassend:
(a) eine oder mehrere Fallen für die Schadorganismen,
(b) Mittel zur Erfassung eines oder mehrerer Standorte, an denen die eine oder mehrere Fallen aufgestellt worden sind,
(c) Mittel zum Wiederfinden der einen oder mehreren aufgestellten Fallen,
(d) Mittel zur Aufnahme eines oder mehrerer digitaler Bilder der in der einen oder mehreren Fallen befindlichen Schadorganismen,
(e) Mittel zur Identifizierung der in der einen oder mehreren Fallen befindlichen Schadorganismen,
(f) Mittel zur Ermittlung der jeweiligen Menge der identifizierten Schadorganismen,
(g) Mittel zur Ermittlung einer Befallsdichte der identifizierten Schadorganismen an den erfassten Standorten.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines mobilen Computersystems geladen werden kann und dort das Computersystem dazu veranlasst, folgende Schritte ausführen:
- Empfangen einer Mitteilung über ein bestehendes Risiko für den Befall eines Feldes mit einem tierischen Schadorganismus,
- Anzeigen einer Aufforderung zum Aufstellen einer oder mehrerer Fallen in dem Feld gegenüber einem Nutzer,
- Erfassen und Speichern der Position des mobilen Computersystems zusammen mit der Information, dass sich an der Position eine Falle befindet, für den Fall, dass der Nutzer das Aufstellen einer Falle gegenüber dem Computerprogramm anzeigt,
- Empfangen einer Mitteilung zur Kontrolle einer aufgestellten Falle,
- Leiten des Nutzers zu der zu kontrollierenden Falle anhand der gespeicherten Position,
- Anzeigen einer Aufforderung zur Aufnahme einer oder mehrerer digitaler Bilder der in der Falle befindlichen Schadorganismen gegenüber dem Nutzer,
- entweder Übertragen des oder der digitalen Bilder an ein weiteres Computersystem und Empfangen von Informationen über die Zahl und Art der identifizierten Schadorganismen, oder Analysieren des oder der digitalen Bilder und Ermitteln der Zahl und Art der in der Falle befindlichen Schadorganismen,
- Anzeigen von Informationen über die Zahl und Art der identifizierten Schadorganismen gegenüber dem Nutzer.

Die Erfindung wird nachstehend näher erläutert, ohne zwischen den Erfindungsgegenständen (Verfahren, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, System, Computerprogrammprodukt) sie erfolgen.

In einem ersten Schritt des erfindungsgemäßen Verfahrens werden Fallen für Schadorganismen, die beim Anbau einer Kulturpflanze auftreten können, in dem Feld, in dem die Kulturpflanzen angebaut werden, aufgestellt.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Unter einem "Schadorganismus" wird nachfolgend ein mobiler Organismus verstanden, der beim Anbau von Kulturpflanzen in Erscheinung treten und die Kulturpflanze schädigen, oder die Ernte der Kulturpflanze negativ beeinflussen kann. Beispiele für derartige Schadorganismen sind tierische Schädlinge wie beispielsweise Insekten oder Spinnentiere.

Der Schadorganismus muss in dem Sinne "mobil" sein, dass er in eine Falle gelangen kann. Vorzugsweise handelt es sich um einen tierischen Schädling aus der Gruppe der Insekten (in den verschiedenen Stadien von Larve (Raupe, Afterraupe) bis zum Adultstadium), Schnecken, Würmer und Spinnentiere.

Besonders bevorzugt handelt es sich bei den Schadorganismen um solche, die sich durch eine Farbe (z.B. die gelbe Farbe bei Gelbfangschalen) anlocken lassen. Beispiele für derartige Schadorganismen sind Rapsschädlinge wie beispielsweise Großer Rapsstengelrüssler, Gefleckter Kohltriebrüssler, Rapsglanzkäfer, Kohlschotenrüssler, Kohlschotenmücke und Rapserdfloh.

Bei der Falle handelt es sich vorzugsweise um eine Fangschale oder eine beleimte Farbtafel. Neben oder anstelle einer Farbe können weitere/andere Merkmale vorhanden sein, die Schadorganismen anlocken (Lockmittel). Denkbar ist zum Beispiel die Verwendung eines Pheromons als Lockmittel.

Bei Verwendung eines oder mehrerer Lockmittel(s) ist dessen/deren Einfluss auf die Menge angelockter Schadorganismen zu berücksichtigen: in eine Falle mit Lockmittel gelangen bei gleicher Befallsdichte mehr Schadorganismen als in eine Falle ohne Lockmittel. Vorzugsweise werden ein oder mehrere Lockmittel verwendet, die zumindest über den Zeitraum zwischen Aufstellen der Falle und erster Befallskontrolle eine konstante Wirkung erzielen. Da eine Farbe als Lockmittel über einen solchen Zeitraum in der Regel konstant bleibt, hat sie einen Vorteil gegenüber einem Pheromon, das sich schnell verflüchtigen kann. Fangschalen haben zudem den Vorteil, dass sie sich einfach auswaschen lassen und dann viele Male wiederverwendet werden können.

Die Korrelation zwischen der Zahl der nach einem definierten Zeitraum in einer Falle befindlichen Schadorganismen und der Befallsdichte (Kalibirierung) lässt sich durch Versuchsreihen ermitteln. Die Hersteller von Fallen geben in der Regel in der Gebrauchsanweisung bereits an, ab welcher Zahl von Schadorganismen eine Schadschwelle überschritten ist, so dass ein Anwender derartige Versuchsreihen nicht selbst vornehmen muss.

Die Fallen werden (meist gemäß der Herstellerangaben) in dem Feld aufgestellt.

Um die Fallen bei der Befallskontrolle wiederfinden zu können, wird in einem zweiten Schritt (Schritt (B) des erfindungsgemäßen Verfahrens) der jeweilige Standort der aufgestellten Fallen erfasst.

Unter Erfassung wird verstanden, dass die Position der Falle in dem Feld ermittelt und gespeichert wird, so dass die Falle zu einem späteren Zeitpunkt anhand der erfassten Positionsdaten schnell und einfach wiedergefunden werden kann.

Vorzugsweise werden zur Erfassung die geographischen Koordinaten (geographische Breite und geographische Länge) der Falle ermittelt und gespeichert. Üblich ist dabei die Verwendung des Sexagesimalsystems, d.h. ein Grad ist unterteilt in sechzig Minuten, eine Minute wiederum in sechzig Sekunden. Denkbar ist aber auch die Dezimalschreibweise, bei der über beliebig viele Nachkommastellen die gewünschte Genauigkeit erreicht werden kann.

Die Erfassung des Standorts erfolgt vorzugsweise unter Verwendung eines Positionsbestimmungssystems.

Ein bekanntes Positionsbestimmungssystem ist beispielsweise ein Satellitennavigationssystem wie beispielsweise NAVSTAR GPS, GLONASS, Galileo der Beidou.

Da sich die Abkürzung GPS (Globales Positionsbestimmungssystem) in der Umgangssprache als generische Bezeichnung für alle Satellitennavigationssysteme etabliert hat, wird nachfolgend der Begriff GPS als Sammelbezeichnung für alle Positionsbestimmungssysteme verwendet.

Heutzutage verfügen nahezu alle so genannten Smartphones und Tablet-Computer über einen GPS-Sensor, mit dessen Hilfe die Position des Smartphones bzw. Tablet-Computers bestimmt werden kann.

In einer bevorzugten Ausführungsform erfolgt damit die Erfassung des Standorts einer Falle mit Hilfe eines GPS-Sensors.

Vorzugsweise ist der GPS-Sensor mit einem mobilen Computersystem verbunden, auf dem ein Computerprogramm installiert ist. Heutige Smartphones und Tablet-Computer sind Beispiele für mobile Computersysteme, auf denen Computerprogramme (meist als "App(s)" bezeichnet) installiert sind, und die über einen GPS-Sensor verfügen. Ein weiteres Beispiel sind Digitalkameras.

In einer bevorzugten Ausführungsform erfolgt die Erfassung des Standorts einer Falle unter Verwendung eines GPS-Sensors und computerunterstützt. Es ist zum Beispiel denkbar, dass diejenige Person, die eine Falle aufstellt, nach dem Aufstellen der Falle das mobile Computersystem einsetzt, um den aktuellen Standort, der durch den GPS-Sensor ermittelt wird, auf dem Computersystem zu speichern.

Es ist zum Beispiel denkbar, dass auf dem mobilen Computersystem ein entsprechendes Computerprogramm installiert ist, das durch den Fallenaufsteller gestartet wird. Beispielsweise durch Drücken eines virtuellen Knopfes (Button) kann das Computerprogramm veranlasst werden, den aktuellen Standort mittels des GPS-Sensors zu ermitteln und diesen dann zusammen mit der Information, dass an dem Standort eine Falle aufgestellt worden ist, in einem Speicher des Computersystems abzuspeichern.

In einer Ausführungsform verfügt die Falle über einen maschinenlesbaren Code, durch den sich das Erfassen des Standorts einer Falle initiieren lässt. Wird ein solcher maschinenlesbarer Code von dem mobilen Computersystem gelesen, initiiert dies die Ermittlung des Standorts mit Hilfe des GPS-Sensors. Das Computerprogramm ist entsprechend konfiguriert, so dass es die von dem maschinenlesbaren Code gelesene Information so interpretiert, dass es die aktuelle Position mittels des GPS-Sensors ermittelt und diese zusammen mit der Information, dass sich an dieser Position eine Falle befindet, in einem Speicher des Computersystems speichert.

Es ist denkbar, dass der maschinenlesbare Code eine für jede einzelne Falle eindeutige Kennung (z.B. eine Kennnummer oder eine Identifikationsnummer) verfügt. Es ist aber auch denkbar, für jeden vorliegenden Fallentyp eine typspezifische Kennung vorzusehen.

Vorzugsweise handelt es sich bei dem maschinenlesbaren Code um einen optoelektronisch lesbaren Code, wie beispielsweise einen Strichcode (z.B. Codabar, Code128 u.a.), einen 2D-Code (z.B. Codablock, Code 49 u.a.) oder einen Matrix-Code (z.B. DataMatrix, MaxiCode, Aztec-Code, QR-Code, u.a.).

Es ist aber auch denkbar, dass die Falle mit einem elektronischen Chip (IC, engl. integrated circuit), oder einem RFID-Transponder (engl. Radio-frequency identification) ausgestattet ist.

In einer bevorzugten Ausführungsform der vorliegenden Erfindung wird die Erfassung des Standorts einer Falle durch das Erzeugen einer digitalen Aufnahme der Falle initiiert. In einem solchen Fall umfasst das mobile Computersystem eine Kameraeinheit, mit der eine digitale Aufnahme der Falle erstellt werden kann (heutige Smartphones und Tablet-Computer sind beispielsweise mobile Computersysteme, die über eine solche Kameraeinheit verfügen, aber auch Digitalkameras können als mobile Computersysteme mit Kameraeinheit aufgefasst werden - einige Digitalkameras verfügen zudem über einen GPS-Sensor). Der Fallenaufsteller wird instruiert, nach dem Aufstellen einer Falle eine digitale Aufnahme der Falle zu erzeugen. Das mobile Computerprogramm ist so konfiguriert, dass die Erzeugung der digitalen Aufnahme das Ermitteln des aktuellen Standorts mittels des GPS-Sensors und das Speichern des aktuellen Standorts zusammen mit der Information, dass an dem Standort eine Falle aufgestellt worden ist, initiiert. Vorzugsweise wird die digitale Aufnahme der Falle zusammen mit dem Standort in einem Speicher des Computersystems gespeichert. Diese Ausführungsform ist besonders nutzerfreundlich, da sich der Nutzer keine Gedanken über die Erfassung des Standorts machen muss. Er führt einfach das entsprechend konfigurierte Computersystem zusammen mit einer oder mehreren Fallen mit sich und wird instruiert, eine oder mehrere Fallen aufzustellen und die aufgestellten Fallen dann zu fotografieren. Durch die Erzeugung der fotografischen Aufnahme werden dann die Koordinaten des Standorts der Falle ermittelt und gespeichert.

In einer bevorzugten Ausführungsform werden bei der Erzeugung einer fotografischen Aufnahme die Koordinaten des aktuellen Standorts mittels GPS-Sensor ermittelt. Ein Computerprogramm prüft, ob an dem aktuellen Standort (bzw. in einem Umkreis von wenigen Metern (beispielsweise in einem Umkreis von einem Meter bis zehn Metern)) bereits eine Falle erfasst ist. Falls an dem aktuellen Standort noch keine Falle erfasst ist, wird die fotografische Aufnahme als neu aufgestellte Falle gedeutet und vom Computerprogramm eine neu aufgestellte Falle registriert.

In einem weiteren Schritt wird kontrolliert, ob Schädlinge in die aufgestellten Fallen gelangt sind. Der Anwender des erfindungsgemäßen Verfahrens sucht also die aufgestellten Fallen auf (Schritt (C) des erfindungsgemäßen Verfahrens). Da die Standorte (Positionen) der Fallen gespeichert sind, kann er sie einfach und schnell wiederfinden. Vorzugsweise wird er dabei von einem mobilen Computersystem, das einen GPS-Sensor umfasst, unterstützt.

Denkbar ist beispielsweise, dass das Computersystem dem Nutzer durch einen Pfeil (auf einem Bildschirm) die Richtung der aufzusuchenden Falle anzeigt, wie es beispielsweise bei den GPS-gestützten Navigationssystemen für Wanderer üblich ist.

Denkbar ist auch, dass die Entfernung zur aufzusuchenden Falle auf einem Bildschirm angezeigt wird.

Denkbar ist auch, dass auf dem Bildschirm des mobilen Computersystems eine virtuelle Repräsentation des Felds zusammen mit den aufgestellten Fallen dargestellt ist. So kann der Nutzer erkennen, wo sich im Feld Fallen befinden. Zusätzlich kann auch die Position des Nutzers in der virtuellen Repräsentation angezeigt werden, so dass der Nutzer erkennen kann, wie er selbst in Bezug zu den aufgestellten Fallen positioniert ist, in welche Richtung er sich bewegen muss, um zu einer Falle zu gelangen, und wie weit er noch von einer aufgestellten Falle entfernt ist.

Es ist auch denkbar, die Technologie der "erweiterten Realität" (engl. augmented reality) zu verwenden, um den Nutzer beim Wiederauffinden der aufgestellten Fallen zu unterstützen. Bei dieser Technologie wird eine reale Welt auf einem Bildschirm dargestellt und diese Darstellung durch computergenerierte Zusatzinformationen optisch erweitert. Es ist zum Beispiel denkbar, die reale Welt auf dem Bildschirm eines Computersystems (z.B. Smartphone) in einem so genannten Live-Modus darzustellen und in diese Darstellung virtuelle Objekte, welche die aufgestellten Fallen repräsentieren, zu ergänzen. Auch die Verwendung eines Head-up-Displays oder eines Head-mounted-Displays (z.B. Videobrille (Eye Tap)) sind denkbar.

Nachdem der Anwender des erfindungsgemäßen Verfahrens eine aufgestellte Falle aufgesucht hat, erfolgt die Befallskontrolle. Dazu nimmt der Anwender des erfindungsgemäßen Verfahrens ein oder mehrere digitale Bilder des Falleninhalts auf (Schritt (D) des erfindungsgemäßen Verfahrens).

Dazu verwendet er vorzugsweise eine Digitalkamera. Eine Digitalkamera ist eine Kamera, die als Aufnahmemedium anstatt eines fotografischen Films (Analogkamera) ein digitales Speichermedium verwendet, wobei das Bild zuvor mittels eines elektronischen Bildwandlers digitalisiert wird. Wie bereits oben beschrieben, ist ein Smartphone mit einer Kameraeinheit ein Beispiel für eine Digitalkamera mit angeschlossenem Computersystem. Die Begriffe "(digitales) Bild" und "(digitale) Aufnahme" werden in dieser Beschreibung synonym verwendet.

In einer Ausführungsform nimmt der Anwender ein einziges digitales Bild der Falle auf, auf dem alle in der Falle befindlichen Schadorganismen erfasst sind. Denkbar ist aber auch, dass der Anwender mehrere Aufnahmen von der Falle erzeugt, um alle in der Falle befindlichen Schadorganismen zu erfassen. In dem Fall, dass der Anwender mehr als ein Bild von einer Falle aufnimmt, um alle Schadorganismen erfassen zu können, nimmt er die Bilder vorzugsweise so auf, dass sich Bildbereiche von mindestens jeweils zwei Bildern überlappen. Dies erleichtert die spätere Auswertung der Bilder gemäß Schritt (E) des erfindungsgemäßen Verfahrens (siehe unten).

Denkbar ist auch, dass der Anwender ein Bild erzeugt, in dem alle in der Falle befindlichen Schadorganismen erfasst sind und weitere Bilder von einzelnen, in der Falle befindlichen Schadorganismen erzeugt. Die Identifizierung der Schädlinge erfolgt dann auf Basis der Aufnahmen der einzelnen Schadorganismen und die Zählung auf Basis des Bilds mit allen in der Falle vorhandenen Schädlingen.

Vorzugsweise wird der Anwender bei der Erzeugung der digitalen Bilder durch die Digitalkamera und/oder ein mit der Digitalkamera verbundenes Computersystem unterstützt.

Es ist zum Beispiel denkbar, dass die Digitalkamera und/oder ein mit der Digitalkamera verbundenes Computersystem die auf dem Bildsensor der Digitalkamera (mittels der Kameraoptik) abgebildete Falle erkennen kann und dem Nutzer der Kamera eine optische und/oder akustische und/oder sensorische Rückmeldung geben kann, ob die Kamera gegenüber der Falle richtig positioniert ist. "Richtig positioniert" bedeutet dabei, dass die Falle in der Weise auf dem Bildsensor abgebildet ist, dass die spätere, automatisierte Erkennung der Schadorganismen vorgenommen werden kann. Die hierzu erforderlichen Kriterien können als Regeln vorab in der Digitalkamera und/oder in dem mit der Digitalkamera verbundenen Computersystem implementiert werden.

Es ist auch denkbar, dass die Falle über Merkmale verfügt, die von der Digitalkamera oder dem mit der Digitalkamera verbundenen Computersystem durch Bilderkennungsverfahren erkannt werden können. Denkbar wäre zum Beispiel, Ecken und/oder Kanten der ansonsten gelben Falle in einer anderen Farbe zu gestalten. Denkbar sind auch Farbmuster an oder auf der Falle, die visuell erfassbar sind. Solche Merkmale erlauben eine automatisierte Erkennung, ob die Kamera gegenüber der Falle so positioniert ist, dass das aufgenommene Bild der Falle genügende Schärfe besitzt und die Falle vollständig auf dem Bild erfasst ist, so dass die spätere Erkennung von Schadorganismen auf dem Bild korrekt ablaufen kann.

Es ist beispielsweise denkbar, eine kreisförmige und gelbe Fangschale zu verwenden. Der Nutzer wird aufgefordert, ein digitales Bild von der Fangschale in der Aufsicht zu erzeugen. Die Fangschale hebt sich aufgrund der gelben Farbe von der Umgebung (grüne Pflanzen, brauner Ackerboden) ab und kann daher mittels Bilderkennungsmethoden auf dem digitalen Bild erkannt werden. Das Computerprogramm kann prüfen, ob die abgebildete Schale kreisförmig ist. Ist sie nicht kreisförmig sondern oval, ist dies ein Anzeichen dafür, dass die Kamera nicht richtig gegenüber der Schale positioniert ist und die spätere Erkennung von Schädlingen erschwert wird. Hier könnte dem Nutzer eine Rückmeldung gegeben werden, die Kamera anders zu positionieren, so dass die Abbildung eine kreisförmige Schale zeigt.

Digitale Aufnahmen von Fallen werden in einem Speicher der Digitalkamera und/oder des mit der Digitalkamera verbundenen Computersystems gespeichert.

In einem weiteren Schritt (Schritt (E) des erfindungsgemäßen Verfahrens) werden die auf einem oder mehreren digitalen Bildern erfassten Schadorganismen gezählt und identifiziert.

Die Identifizierung dient dazu, entscheiden zu können, ob es sich bei einem gefangenen Organismus um einen Schadorganismus, einen Nützling oder einen Organismus handelt, der für den Anbau der Kulturpflanzen ohne Belang ist. Dementsprechend kann eine Identifizierung die Zuordnung zu den drei Kategorien: "schädlich", "nützlich", und "neutral" bedeuten. Vorzugsweise dient die Identifizierung eines Schadorganismus der Identifizierung von Maßnahmen, die gegen den Schadorganismus ergriffen werden können. Insofern kann die Identifizierung auch die Zuordnung zu einer zu ergreifenden Maßnahme sein. Eine zu ergreifende Maßnahme kann beispielsweise die Applikation eines bestimmten Schädlingsbekämpfungsmittels sein. Vorzugsweise wird unter Identifizierung eines Schadorganismus ein Vorgang verstanden, der es erlaubt, ein geeignetes Mittel zur Bekämpfung des Schadorganismus auszuwählen.

Unter Identifizierung kann aber auch die Zuordnung einzelner Schadorganmisen zu einem Taxon verstanden werden, d.h. die Zuordnung zu einer Klasse, Ordnung, Überfamilie, Familie, Unterfamilie, Tribus, Gattung, Art, Unterart oder zu einer Zwischenstufe im Sinne der biologischen Taxonomie.

Synonym zu dem Begriff "Identifzieren des Organisums" wird in dieser Beschreibung auch der Begriff "Bestimmen der Art des Organismus" verwendet. Dementsprechend kann der Begriff "Art" z.B. eine Kategorie wie "schädlicher Organimus", "nützlicher Organismus" oder "neutraler Organismus" bedeuten, oder er kann z.B. eine Kategorie wie "Schadorganismus, der mit dem X bekämpft werden kann" bedeuten, oder er kann z.B. ein Taxon bedeuten, wobei "X" für ein bestimmtes Bekämpfungsmittel steht.

Wurden von einer Falle mehrere Aufnahmen erzeugt, um alle in der Falle befindlichen Schadorganismen zu erfassen, werden diese digitalen Aufnahmen vorzugsweise zunächst in eine einzige digitale Aufnahme überführt, bevor die Identifizierung und Auszählung der Schadorganismen beginnt. In der Regel sind die zumeist dunkelfarbigen Schadorganismen gegenüber dem zumeist hellen (z.B. gelben) Hintergrund der Falle gut zu erkennen. Sie bilden zumeist ein unregelmäßiges Muster, das durch ein Bilderkennungsverfahren erkannt werden kann. Dieses Muster kann z.B. verwendet werden, um Musteranteile, die in mehreren Bildern auftreten, zu überlagern und so die mehreren Bilder zu einem digitalen Bild zusammenzufügen.

Die Identifizierung und Auszählung der Schadorganismen erfolgt automatisiert. Das bedeutet, dass ein Anwender des erfindungsgemäßen Verfahrens die Schadorganismen nicht selbst zählen und identifizieren muss, sondern dass das jeweilige Bild durch ein Computerprogramm in einem Arbeitsspeicher eines Computersystems Bildbearbeitungs- und Bilderkennungsalgorithmen zugeführt wird. Mit Hilfe dieser Algorithmen wird das Bild analysiert, ggf. präpariert (Filterungen und ähnliche Operationen) und es werden Merkmale extrahiert, die einen Schluss darüber erlauben, wie viele Schadorganismen vorliegen und welcher Art diese sind. Derartige Algorithmen sind im Stand der Technik ausgiebig beschrieben.

Es ist denkbar zur Identifizierung von Schadorganismen ein künstliches neuronales Netz zu verwenden.

Vorzugsweise werden weitere Informationen zur Identifizierung der Schadorganismen herangezogen. Beispielsweise kann die Geo-Position genutzt werden. Befindet sich die Falle beispielsweise in Deutschland, so kommen andere Schadorganismen in Betracht als wenn sich die Falle beispielsweise in Brasilien befindet. Auch die aktuelle Jahreszeit ist eine wichtige Information, die genutzt werden kann. Je nach Jahreszeit können unterschiedliche Schadorganismen in Erscheinung treten. Aber auch die angebaute Kulturpflanze, in deren Nähe ein Schadorganismus gefangen worden ist, kann Auskunft über den vorliegenden Schadorganismus geben.

Die Identifizierung und/oder Auszählung der Schadorganismen kann auf dem mobilen Computersystem vorgenommen werden, das der Anwender mit sich trägt, wenn er die digitalen Aufnahmen der Fallen erzeugt. Es ist aber auch denkbar, dass das Computersystem, dass der Anwender mit sich führt, dazu verwendet wird, die Aufnahmen zu erzeugen und die Aufnahmen dann auf ein anderes, vorzugsweise stationäres Computersystem zu übertragen, auf dem die Bilderkennung abläuft.

Wird vom Anwender ein Smartphone oder ein Tablet-Computer als mobiles Computersystem eingesetzt, können aufgenommene Bilder zur weiteren Analyse über das Mobilfunknetz und/oder das Internet an ein externes, vorzugsweise stationäres und vorzugsweise zentrales Computersystem (z.B. eines mit mehr Rechenleistung) übertragen werden.

Diese Übertragung kann unmittelbar nach Erzeugen einer oder mehrerer digitaler Bilder eines Falleninhalts erfolgen. Es ist aber auch denkbar, dass die Übertragung zu einem späteren Zeitpunkt, z.B. nachdem alle Fallen kontrolliert worden sind, erfolgt. Die Übertragung kann drahtlos oder kabelgebunden erfolgen. Die Übertragung kann über eine kurzreichweitige oder eine langreichweitige Kommunkationsverbindung erfolgen. Denkbar ist, dass die Übertragung von Informationen zwischen dem mobilen und dem stationären Computersystem über eine Mobilfunkverbindung und/oder das Internet erfolgt. Denkbar ist aber auch, dass das mobile Computersystem über eine Kabelverbindung mit dem stationären Computersystem verbunden wird, um die Bildaufnahmen zu übertragen. Vorzugsweise erfolgt die Übertragung über eine Mobilfunkverbindung und/oder das Internet.

Das Ergebnis des Schritts (E) ist eine Information darüber, welche Schadorganismen in die Falle gelangt sind und in welcher Zahl sie dort vorliegen.

Diese Information kann dem Anwender angezeigt werden.

In einem weiteren Schritt (Schritt (F) des erfindungsgemäßen Verfahrens) erfolgt die Ermittlung einer oder mehrerer Befallsdichten.

Da für jeden in eine Falle gelangten Schadorganismus die jeweilige Zahl bekannt ist, lässt sich für den Standort, an dem die Falle aufgestellt ist/war, eine Befallsdichte für jede Spezies errechnen.

Vorzugsweise werden die Befallsdichten, die für die jeweiligen Standorte ermittelt worden sind, zusammen mit dem jeweiligen Standort in einem Langzeitspeicher (z.B. Festplatte) eines Computersystems gespeichert.

Anhand der Befallsdichte lässt sich erkennen, ob eine Schadschwelle überschritten worden ist. Ist eine Schadschwelle überschritten worden, wird dem Anwender vorzugsweise eine Empfehlung gegeben, welche Maßnahmen er ergreifen sollte. Vorzugsweise erhält er Informationen darüber, welche Bekämpfungsmittel er einsetzen sollte und in welcher Menge er die Bekämpfungsmittel einsetzen sollte.

Es ist denkbar, dass dem Nutzer auch Empfehlungen zu einem günstigen oder optimalen Zeitpunkt für eine Ausbringung von Bekämpfungsmittel gegeben werden. Dazu kann das System beispielsweise Wettervorhersagen nutzen.

In einer bevorzugten Ausführungsform wird auf Basis der Informationen, an welchen Orten im Feld Schädlinge in welcher Menge aufgetreten sind, eine so genannte digitale Applikationskarte erzeugt.

Die digitale Applikationskarte ist eine virtuelle Repräsentation des Feldes. Die digitale Applikationskarte ist maschinenlesbar und gibt an, bei welchen Teilflächen des Feldes eine Applikation eines oder mehrerer Bekämpfungsmittel erfolgen soll. Vorzugsweise ist angegeben, in welchen Mengen und in welcher Konzentration ein Bekämpfungsmittel eingesetzt werden soll. Auch ein günstiger oder optimaler Zeitpunkt kann angegeben sein.

Vorzugsweise lässt sich die digitale Applikationskarte oder Teile davon in einen Arbeitsspeicher einer Applikationsvorrichtung laden.

Unter einer Applikationsvorrichtung wird eine maschinelle Vorrichtung zum Applizieren einer Bekämpfungsmittel-Formulierung auf einem Feld verstanden. Eine solche Applikationsvorrichtung umfasst in der Regel mindestens einen Behälter zur Aufnahme mindestens einer Bekämpfungsmittel-Formulierung, eine Sprühvorrichtung, mit der die Bekämpfungsmittel-Formulierung auf dem Feld abgegeben wird und eine Steuereinrichtung, mit der die Förderung der mindestens einen Bekämpfungsmittel-Formulierung aus ihrem Behälter in Richtung Sprühvorrichtung gesteuert wird. Die digitale Applikationskarte wird dementsprechend vorzugsweise in dem Arbeitsspeicher der Steuereinheit gespeichert. Die Steuereinheit steht darüber hinaus vorzugsweise mit einem Positionsbestimmungssystem in Verbindung, das die Lage der Applikationsvorrichtung auf dem Feld ermittelt. Vorzugsweise setzt die Steuereinrichtung den Applikationsprozess dann in Gang, wenn auf der digitalen Applikationskarte verzeichnet ist, dass an einem Ort eine Applikation erfolgen soll und wenn das Positionsbestimmungssystem meldet, dass sich die Applikationsvorrichtung gerade an diesem Ort befindet.

Vorzugsweise wird ein Prognosemodell zur Vorhersage von Schädlingsbefällen zur Unterstützung eingesetzt. Solche Prognosemodelle sind im Stand der Technik ausgiebig beschrieben und auch kommerziell verfügbar. Das Entscheidungsunterstützungssystem proPlant Expert (Newe M., Meier H., Johnen A., Volk T.: *proPlant expert.com* - *an online consultation system on crop protection in cereals, rape, potatoes and sugarbeet.*

EPPO Bulletin 2003, 33, 443-449; Johnen A., Williams I.H., Nilsson C., Klukowski Z., Luik A., Ulber B.: The proPlant Decision Support System: Phenological Models for the Major Pests of Oilseed Rape and Their Key Parasitoids in Europe, Biocontrol-Based Integrated Management of Oilseed Rape Pests (2010) Ed.: Ingrid H. Williams. Tartu 51014, Estonia. ISBN 978-90-481-3982-8. p. 381 - 403; www.proPlantexpert.com) verwendet zur Prognose Daten zur angebauten Kultur (Entwicklungsstadium, Wachstumsbedingungen, Pflanzenschutzmaßnahmen), zur Witterung (Temperatur, Sonnenscheindauer, Windgeschwindigkeit, Niederschlag) sowie zu den bekannten Schädlingen / Krankheiten (ökonomische Grenzwerte, Schädlings-/Krankheitsdruck). Mit Hilfe dieser Daten wird ein feldspezifisches Befallsrisiko abgeschätzt und eine Empfehlung zu Behandlungszeitpunkt, Pflanzenschutzmittel sowie eine Bewertung vergangener Pflanzenschutzmaßnahmen erstellt.

In einer bevorzugten Ausführungsform wird ein solches Prognosemodell verwendet, um den Zeitpunkt und/oder die Standorte zum Aufstellen der Fallen festzulegen.

Es ist zum Beispiel denkbar, dass mit Hilfe des Prognosemodells ermittelt wird, wann mit einem Befall von Schadorganismen zu rechnen ist. Ein Landwirt erhält bei Überschreiten einer vorher definierten Risikoschwelle für das Auftreten eines Befalls eine Mitteilung, wann er welche Fallen aufstellen sollte. Vorzugsweise erhält er auch Informationen darüber, wo er die Fallen aufstellen soll. Es ist beispielsweise denkbar, die Fallen an den Standorten aufzustellen, an denen aufgrund lokaler Bedingungen ein besonders hohes Befallsrisiko besteht und/oder an denen in der Vergangenheit bereits Schadorganismen beobachtet worden sind.

Es ist denkbar, dass der Fallenaufsteller GPS-gestützt an die Orte geleitet wird, an denen er eine Falle aufstellen soll.

Das Aufstellen der jeweiligen Falle quittiert er dann beispielsweise durch das Erzeugen einer digitalen Aufnahme der aufgestellten Falle. Der Begriff "quittiert" bedeutet dabei, dass der Fallensteller gegenüber dem Computerprogramm zum Beispiel durch Betätigen eines virtuellen Schalters oder durch Erzeugen einer fotografischen Aufnahme der aufgestellten Falle oder durch Einlesen einer Kennung an der Falle bestätigt, dass die Falle aufgestellt worden ist, so dass das Computerprogramm die Position der aufgestellten Falle speichern kann.

Ferner ist es denkbar, das Prognosemodell zu verwenden, um dem Landwirt eine Meldung zu übermitteln, zu welchen Zeitpunkten er die aufgestellten Fallen kontrollieren soll. Die Kontrolle einer Falle wird dann beispielsweise durch das Erzeugen einer digitalen Aufnahme der Falle mit den darin befindlichen Schadorganismen quittiert/bestätigt.

Es ist auch denkbar, dass die zu kontrollierenden Fallen und die bereits kontrollierten Fallen auf einer virtuellen Karte des Feldes angezeigt werden, wobei sich zu kontrollierende und bereits kontrollierte Fallen auf der virtuellen Karte unterscheiden lassen, beispielsweise durch eine unterschiedliche farbliche und/oder geometrische Gestaltung.

Die Informationen, die in Schritt (E) und/oder (F) des erfindungsgemäßen Verfahrens gewonnen werden, können verwendet werden, um das Prognosemodell zu kalibrieren, zu aktualisieren und/oder zu optimieren. Das Prognosemodell macht eine Vorhersage darüber, ob mit einem Schädlingsbefall gerechnet werden muss. Die Befallskontrolle anhand der aufgestellten Fallen gibt dann die Rückmeldung, ob tatsächlich ein Befall vorliegt und wie schwerwiegend der Befall ist. Diese Informationen können dann in das Prognosemodell zurückfließen.

Es ist auch denkbar, diese Informationen zu verwenden, um Landwirte mit Feldern in der Umgebung, die von einer Übertragung der Schädlinge betroffen sein könnten, vorzuwarnen.

Es kann in einigen Ländern erforderlich sein, vor einer Applikation eines Schädlingsbekämpfungsmittels einen Nachweis über einen vorliegenden Befall zu erbringen. Das vorliegende System kann verwendet werden, um einen Befall z.B. gegenüber einer Behörde zu dokumentieren.

Vorzugsweise wird der gesamte Prozess vom Aufstellen der Fallen bis zum Ermitteln von Befallsdichten von einem oder mehreren Computerprogramm unterstützt.

Nachfolgend wird eine bevorzugte Ausführungsform der vorliegenden Erfindung beschrieben.

Das erfindungsgemäße System umfasst eine Zahl N an Fallen, wobei N eine ganze Zahl ist. Vorzugsweise liegt N im Bereich von 2 bis 100, noch mehr bevorzugt im Bereich von 3 bis 20.

Das erfindungsgemäße Verfahren umfasst ferner ein Smartphone oder ein Tablet-PC als mobiles Computersystem, das über einen GPS-Sensor und eine Digitalkamera verfügt. Die Digitalkamera ist in der Lage, Bilder von den in einer Falle befindlichen Schädlingen mit einer solchen Auflösung aufzunehmen, dass eine automatische Identifizierung der Schädlinge erfolgen kann.

Das erfindungsgemäße Verfahren umfasst ein stationäres Computersystem, das mit dem mobilen Computersystem über eine langreichweitige, drahtlose Kommunikationsverbindung verbunden ist.

Auf dem stationären Computersystem ist ein Computerprogramm installiert, das Vorhersagen für den Befall eines Feldes mit Schadorganismen auf Basis von Wetter-, Schädlings-, Kultur- und Umweltbedingungen macht.

Ein Nutzer des mobilen Computersystems (z.B. Landwirt) erhält von dem stationären Computersystem eine Mitteilung, dass ein Risiko für den Befall eines seiner Felder mit einem Schadorganismus besteht. Es wird dem Nutzer empfohlen, eine Zahl N an Fallen für den Schadorganismus in seinem Feld aufzustellen. Er erhält vorzugsweise Empfehlungen, an welchen Orten im Feld die Fallen aufzustellen sind. Die Orte wurden dabei von dem Computerprogramm auf dem stationären Computersystem so ausgewählt, dass für mindestens einen Ort gemäß des Vorhersagemodells ein maximales Risiko eines Schädlingsbefalls besteht.

Der Nutzer wird durch das mobile Computersystem mittels des GPS-Sensors an diejenigen Orte geführt, an denen er eine Falle aufstellen sollte. Der Nutzer stellt die jeweilige Falle auf und quittiert das Aufstellen dadurch, dass er ein digitales Bild von der Falle mit Hilfe der Digitalkamera seines mobilen Computersystems aufnimmt. Die Information, dass eine Falle an einem Ort aufgestellt worden ist, wird zusammen mit der Ortsinformation vom mobilen Computersystem an das stationäre Computersystem übertragen.

Der Nutzer erhält von dem stationären Computersystem Informationen darüber, zu welchen Zeiten er die aufgestellten Fallen kontrollieren sollte. Vorzugsweise erhält der Nutzer Erinnerungen, wenn sich der Termin zur Befallskontrolle nähert und/oder der Termin erreicht ist und/oder überschritten ist.

Bei der Befallskontrolle wird der Nutzer mit Hilfe des GPS-Sensors seines mobilen Computersystems an den jeweiligen Ort der zu kontrollierenden Falle geleitet. Hat er die jeweilige Falle erreicht, wird er aufgefordert, ein digitales Bild vom Inhalt der Falle aufzunehmen. Dabei wird er von seinem mobilen Computersystem unterstützt. Er positioniert die Digitalkamera so gegenüber der Falle, dass der Inhalt der Falle auf dem Bildsensor der Digitalkamera abgebildet wird. Ist der gesamte Inhalt auf dem Bildsensor sichtbar und ist er ausreichend scharf abgebildet, erhält der Nutzer einen entsprechenden Hinweis (optisch, akustisch und/oder sensorisch). Er nimmt ein digitales Bild auf. Das digitale Bild wird an das stationäre Computersystem weitergeleitet. Vorzugsweise werden weitere Informationen (Meta-Daten) an das stationäre Computersystem übertragen, wie z.B. Uhrzeit, Datum, Geo-Koordinaten und/oder Informationen über die angebaute Kulturpflanze usw. Auf dem stationären Computersystem wird das digitale Bild ggf. unter Hinzunahme der Meta-Daten analysiert. Es werden die auf der Bildaufnahme festgehaltenen Schadorganismen identifiziert und gezählt.

Der Nutzer erhält von dem stationären Computersystem eine Information über das Ergebnis der Bildanalyse. Ferner erhält er Informationen, was weiter zu tun ist, beispielsweise ob und wie die Falle für den weiteren Einsatz im Feld reaktiviert werden kann/soll.

Nachdem mehrere Fallen zu einer Zeit oder zu verschiedenen Zeiten kontrolliert worden sind, erhält der Nutzer vom stationären Computersystem eine Mitteilung über die Maßnahmen, die er zur Bekämpfung von identifizierten Schadorganismen unternehmen sollte.

Die Informationen über die kontrollierten Fallen und die in den Fallen identifizierten und quantifizierten Schadorganismen werden vom stationären Computersystem verwendet, um das Prognosemodell zu aktualisieren und/oder eine Mitteilung über ein bestehendes Befallsrisiko an einen oder mehrere weitere Landwirte zu übermitteln.

## Patentansprüche

1. Verfahren zur Ermittlung eines Befalls von Kulturpflanzen mit Schadorganismen, umfassend die folgenden Schritte:
(A) Aufstellen einer oder mehrerer Fallen für die Schadorganismen in einem Feld, in dem die Kulturpflanzen angebaut werden,
(B) Erfassen des jeweiligen Standorts der einen oder mehreren Fallen,
(C) Wiederaufsuchen der einen oder mehreren Fallen anhand des jeweilig erfassten Standorts,
(D) Aufnahme eines oder mehrerer digitaler Bilder der in der einen oder mehreren Fallen befindlichen Schadorganismen,
(E) automatisiertes Identifizieren und Zählen der in der einen oder mehreren Fallen befindlichen Schadorganismen,
(F) Ermitteln einer oder mehrerer Befallsdichten der jeweils identifizierten Schadorganismen an den erfassten Standorten,
wobei zur Aufnahme der digitalen Bilder ein mobiles Computersystem verwendet wird, das über einen Bildsensor und einen GPS-Sensor verfügt, und das so konfiguriert ist, dass es einen Nutzer bei der Erstellung der digitalen Bilder in der Weise unterstützt, dass es mittels eines Signals dem Nutzer zu erkennen gibt, wann eine auf dem Bildsensor abgebildete Abbildung des Falleninhalts für die nachfolgende Analyse zur Bestimmung der Zahl und Art der in der Falle befindlichen Schadorganismen geeignet ist, indem es analysiert, ob die auf dem Bildsensor abgebildete Falle über den gesamten abgebildeten Bereich ausreichend scharf abgebildet ist und/oder keine Verzerrungen in der Abbildung auftreten, und
wobei zur Ermittlung der Zahl und/oder Art der in einer Falle befindlichen Schadorganismen neben den digitalen Bildern Informationen zu der am Standort der Falle angebauten Kulturpflanze herangezogen werden.

2. Verfahren nach Anspruch 1, wobei ein Nutzer zur Erfassung der Standorte der aufgestellten Fallen ein mobiles Computersystem verwendet, das über einen GPS-Sensor verfügt.

3. Verfahren nach Anspruch 2, **dadurch gekennzeichnet, dass** der Nutzer des mobilen Computersystems das Aufstellen einer Falle dadurch quittiert/bestätigt,
- dass er einen maschinenlesbaren Code, der sich an oder auf der Falle befindet, in den Arbeitsspeicher des mobilen Computersystems einliest, oder
- dass er mit Hilfe eines Bildsensors, der mit dem mobilen Computersystem verbunden ist, eine digitale Aufnahme von der aufgestellten Falle erstellt.

4. Verfahren nach einem der Ansprüche 2 oder 3, **dadurch gekennzeichnet, dass** der Nutzer beim Wiederaufsuchen einer aufgestellten Falle mittels des mobilen Computersystems an den Standort der aufgestellten Falle geführt wird.

5. Verfahren nach einem der Ansprüche 2 bis 4, **dadurch gekennzeichnet, dass** durch die Aufnahme eines oder mehrerer digitaler Bilder in Schritt (D) registriert wird, dass die entsprechenden Fallen kontrolliert worden sind.

6. Verfahren nach einem der Ansprüche 2 bis 5, **dadurch gekennzeichnet, dass** die in Schritt (D) aufgenommenen Bilder an ein weiteres Computersystem übertragen werden, auf dem die Bilder analysiert werden, um die Zahl und Art der in einer Falle befindlichen Schadorganismen zu bestimmen.

7. Verfahren nach einem der Ansprüche 2 bis 5, **dadurch gekennzeichnet, dass** die in Schritt (D) aufgenommenen Bilder auf dem mobilen Computersystem analysiert werden, um die Zahl und Art der in einer Falle befindlichen Schadorganismen zu bestimmen.

8. Verfahren nach einem der Ansprüche 1 bis 7, **dadurch gekennzeichnet, dass** zur Ermittlung der Zahl und/oder Art der in einer Falle befindlichen Schadorganismen neben den digitalen Bildern Informationen zum Standort der Falle und zur Jahreszeit, in der die digitalen Bilder erzeugt worden sind, herangezogen werden.

9. Verfahren nach einem der Ansprüche 1 bis 8, **dadurch gekennzeichnet, dass** ein Prognosemodell zur Vorhersage von Schädlingsbefällen zur Unterstützung eingesetzt wird.

10. Verfahren nach einem der Ansprüche 1 bis 9, **dadurch gekennzeichnet, dass** zur Identifizierung von Schadorganismen ein künstliches neuronales Netz verwendet wird.

11. Verfahren nach einem der Ansprüche 1 bis 10, wobei
- ein Nutzer aufgrund von Berechnungen eines Prognosemodells für den Befall eines Feldes mit einem Schadorganismus eine Mitteilung erhält, dass in einem Feld ein Befallsrisiko herrscht,
- der Nutzer eine Aufforderung erhält, eine oder mehrere Fallen für den Schadorganismus in dem Feld aufzustellen,
- der Nutzer Informationen zu den Orten im Feld erhält, an denen Fallen aufgestellt werden sollten, wobei vorzugsweise für einen der Orte ein maximales Befallsrisiko vorhergesagt worden ist,
- der Nutzer eine oder mehrere Fallen in dem Feld aufstellt,
- der Nutzer das Aufstellen der einen oder der mehreren Fallen mittels eines Computersystems quittiert/bestätigt, wodurch die Geo-Positionen der aufgestellten Fallen in einem Langzeitspeicher eines Computersystems gespeichert werden,
- der Nutzer zu einem Zeitpunkt nach dem Aufstellen der einen oder mehreren Fallen eine Mitteilung erhält, dass er die aufgestellten Fallen kontrollieren soll,
- der Nutzer durch ein mobiles Computersystem, das mit einem GPS-Sensor ausgestattet ist, zu den aufgestellten Fallen geführt wird,
- der Nutzer von den Schadorganismen, die sich in den zu kontrollierenden Fallen befinden, ein oder mehrere digitale Bilder erstellt,
- das eine oder die mehreren digitalen Bilder von einem Computersystem analysiert werden, wobei die Art und Zahl der in einer abgebildeten Falle befindlichen Schadorganismen bestimmt wird,
- dem Nutzer mittels des mobilen Computersystems Informationen zur Zahl und Art der Schadorganismen angezeigt wird.

12. System zur Ermittlung eines Befalls von Kulturpflanzen mit Schadorganismen umfassend:
(a) eine oder mehrere Fallen für die Schadorganismen,
(b) Mittel zur Erfassung eines oder mehrerer Standorte, an denen die eine oder mehrere Fallen aufgestellt worden sind,
(c) Mittel zum Wiederfinden der einen oder mehreren aufgestellten Fallen,
(d) Mittel zur Aufnahme eines oder mehrerer digitaler Bilder der in der einen oder mehreren Fallen befindlichen Schadorganismen,
(e) Mittel zur Identifizierung der in der einen oder mehreren Fallen befindlichen Schadorganismen,
(f) Mittel zur Ermittlung der jeweiligen Menge der identifizierten Schadorganismen,
(g) Mittel zur Ermittlung einer Befallsdichte der identifizierten Schadorganismen an den erfassten Standorten,
wobei zur Aufnahme der digitalen Bilder ein mobiles Computersystem verwendet wird, das über einen Bildsensor und einen GPS-Sensor verfügt, und das so konfiguriert ist, dass es einen Nutzer bei der Erstellung der digitalen Bilder in der Weise unterstützt, dass es mittels eines Signals dem Nutzer zu erkennen gibt, wann eine auf dem Bildsensor abgebildete Abbildung des Falleninhalts für die nachfolgende Analyse zur Bestimmung der Zahl und Art der in der Falle befindlichen Schadorganismen geeignet ist, indem es analysiert, ob die auf dem Bildsensor abgebildete Falle über den gesamten abgebildeten Bereich ausreichend scharf abgebildet ist und/oder keine Verzerrungen in der Abbildung auftreten, und
wobei zur Ermittlung der Zahl und/oder Art der in einer Falle befindlichen Schadorganismen neben den digitalen Bildern Informationen zu der am Standort der Falle angebauten Kulturpflanze herangezogen werden.

13. System nach Anspruch 12, wobei es sich bei den unter den Punkten (a), (b), (c) und (d) um ein mobiles Computersystem handelt, das mit einem GPS-Sensor und einem Bildsensor ausgestattet ist.

14. System nach Anspruch 13, wobei es sich bei den unter den Punkten (e), (f) und (g) genannten Mitteln um ein stationäres Computersystem handelt, das mit dem mobilen Computersystem Daten austauschen kann, wobei die Computersysteme so hergerichtet sind, dass das mobile Computersystem das eine oder die mehreren digitalen Bilder an das stationäre Computersystem übermittelt und das stationäre Computersystem dem mobilen Computersystem die Menge und die Art der identifizierten Schadorganismen übermittelt.

15. System nach einem der Ansprüche 12 bis 14, umfassend ein Prognosemodell zur Vorhersage eines Befallsrisikos für ein Feld mit einem oder mehreren Schadorganismen.

16. Computerprogrammprodukt umfassend einen Datenträger, auf dem ein Computerprogramm gespeichert ist, das in den Arbeitsspeicher eines mobilen Computersystems geladen werden kann und dort das Computersystem dazu veranlasst, folgende Schritte ausführen:
- Empfangen einer Mitteilung über ein bestehendes Risiko für den Befall eines Feldes mit einem tierischen Schadorganismus,
- Anzeigen einer Aufforderung zum Aufstellen einer oder mehrerer Fallen in dem Feld gegenüber einem Nutzer,
- Erfassen und Speichern der Position des mobilen Computersystems zusammen mit der Information, dass sich an der Position eine Falle befindet, für den Fall, dass der Nutzer das Aufstellen einer Falle gegenüber dem Computerprogramm quittiert,
- Empfangen einer Mitteilung zur Kontrolle einer aufgestellten Falle,
- Leiten des Nutzers zu der zu kontrollierenden Falle anhand der gespeicherten Position,
- Anzeigen einer Aufforderung zur Aufnahme einer oder mehrerer digitaler Bilder der in der Falle befindlichen Schadorganismen gegenüber dem Nutzer,
- entweder Übertragen des oder der digitalen Bilder an ein weiteres Computersystem und Empfangen von Informationen über die Zahl und Art der identifizierten Schadorganismen, oder Analysieren des oder der digitalen Bilder und Ermitteln der Zahl und Art der in der Falle befindlichen Schadorganismen,
- Anzeigen von Informationen über die Zahl und Art der identifizierten Schadorganismen gegenüber dem Nutzer,
wobei zur Aufnahme der digitalen Bilder ein mobiles Computersystem verwendet wird, das über einen Bildsensor und einen GPS-Sensor verfügt, und das so konfiguriert ist, dass es einen Nutzer bei der Erstellung der digitalen Bilder in der Weise unterstützt, dass es mittels eines Signals dem Nutzer zu erkennen gibt, wann eine auf dem Bildsensor abgebildete Abbildung des Falleninhalts für die nachfolgende Analyse zur Bestimmung der Zahl und Art der in der Falle befindlichen Schadorganismen geeignet ist, indem es analysiert, ob die auf dem Bildsensor abgebildete Falle über den gesamten abgebildeten Bereich ausreichend scharf abgebildet ist und/oder keine Verzerrungen in der Abbildung auftreten, und
wobei zur Ermittlung der Zahl und/oder Art der in einer Falle befindlichen Schadorganismen neben den digitalen Bildern Informationen zu der am Standort der Falle angebauten Kulturpflanze herangezogen werden.

## Claims

1. A method for determining an infestation of crop plants with harmful organisms, comprising the following steps:
(A) setting up one or more traps for the harmful organisms in a field in which the crop plants are being cultivated,
(B) recording the respective location of the one or more traps,
(C) relocating the one or more traps on the basis of the location respectively recorded,
(D) taking one or more digital images of the harmful organisms located in the one or more traps,
(E) automatically identifying and counting the harmful organisms located in the one or more traps,
(F) determining one or more densities of infestation of the harmful organisms respectively identified at the location recorded,
wherein a mobile computer system that has an image sensor and a GPS sensor is used for taking the digital images, the system being configured so as to assist a user in the creation of the digital images in such a way that it lets the user know by means of a signal when an imaging of the content of a trap depicted on the image sensor is suitable for the subsequent analysis for determining the number and species of the harmful organisms located in the trap, by analyzing whether the trap depicted on the image sensor is depicted sufficiently sharply over the entire region depicted and/or that no distortions occur in the imaging, and
wherein, apart from the digital images, items of information on the crop plant being cultivated at the location of the trap are used for determining the number and/or species of the harmful organisms located in a trap.

2. The method according to claim 1, a user using a mobile computer system that has a GPS sensor for recording the locations of the traps that have been set up.

3. The method according to claim 2, wherein the user of the mobile computer system acknowledges/confirms the setting up of a trap by
- reading into the main memory of the mobile computer system a machine-readable code, which is located at or on the trap, or
- creating a digital picture of the trap that has been set up with the aid of an image sensor that is connected to the mobile computer system.

4. The method according to either of claims 2 and 3, wherein, when relocating a trap that has been set up, the user is guided by means of the mobile computer system to the location of the trap that has been set up.

5. The method according to one of claims 2 to 4, wherein, by taking one or more digital images in step (D), it is registered that the corresponding traps have been checked.

6. The method according to one of claims 2 to 5, wherein the images taken in step (D) are transferred to a further computer system, on which the images are analyzed in order to determine the number and species of the harmful organisms located in a trap.

7. The method according to one of claims 2 to 5, wherein the images taken in step (D) are analyzed on the mobile computer system in order to determine the number and species of the harmful organisms located in a trap.

8. The method according to one of claims 1 to 7, wherein, apart from the digital images, items of information on the location of the trap and the time of year at which the digital images were produced are used for determining the number and/or species of the harmful organisms located in a trap.

9. The method according to one of claims 1 to 8, wherein a predictive model is used as support for predicting pest infestations.

10. The method according to one of claims 1 to 9, wherein an artificial neural network is used for the identification of harmful organisms.

11. The method according to one of claims 1 to 10, wherein
- on the basis of calculations of a predictive model for the infestation of a field with a harmful organism, a user receives a notification that there is a risk of infestation in a field,
- the user receives a request to set up one or more traps for the harmful organism in the field,
- the user receives information on the locations in the field at which traps should be set up, a maximum risk of infestation preferably having been predicted for one of the locations,
- the user sets up one or more traps in the field,
- the user acknowledges/confirms the setting up of the one or more traps by means of a computer system, whereby the geo positions of the traps that have been set up are stored in a long-term memory of a computer system,
- at a time after the setting up of the one or more traps, the user receives a notification that he is to check the traps that have been set up,
- the user is guided to the traps that have been set up by a mobile computer system that is provided with a GPS sensor,
- the user creates one or more digital images of the harmful organisms that are located in the traps to be checked,
- the one or more digital images are analyzed by a computer system, the species and number of the harmful organisms located in a depicted trap being determined,
- information on the number and species of the harmful organisms is indicated to the user by means of the mobile computer system.

12. A system for determining an infestation of crop plants with harmful organisms comprising:
(a) one or more traps for the harmful organisms,
(b) means for recording one or more locations at which the one or more traps have been set up,
(c) means for relocating the one or more traps that have been set up,
(d) means for taking one or more digital images of the harmful organisms located in the one or more traps,
(e) means for identifying the harmful organisms located in the one or more traps,
(f) means for determining the respective amount of harmful organisms identified,
(g) means for determining a density of infestation of the harmful organisms identified at the locations recorded,
wherein a mobile computer system that has an image sensor and a GPS sensor is used for taking the digital images, the system being configured so as to assist a user in the creation of the digital images in such a way that it lets the user know by means of a signal when an imaging of the content of a trap depicted on the image sensor is suitable for the subsequent analysis for determining the number and species of the harmful organisms located in the trap, by analyzing whether the trap depicted on the image sensor is depicted sufficiently sharply over the entire region depicted and/or that no distortions occur in the imaging, and
wherein, apart from the digital images, items of information on the crop plant being cultivated at the location of the trap are used for determining the number and/or species of the harmful organisms located in a trap.

13. The system according to claim 12, the under items (a), (b), (c) and (d) being a mobile computer system that is provided with a GPS sensor and an image sensor.

14. The system according to claim 13, the means mentioned under items (e), (f) and (g) being a stationary computer system that can exchange data with the mobile computer system, the computer systems being set up in such a way that the mobile computer system transmits the one or more digital images to the stationary computer system and the stationary computer system transmits the amount and species of the harmful organisms identified to the mobile computer system.

15. The system according to one of claims 12 to 14, comprising a predictive model for predicting a risk of infestation for a field with one or more harmful organisms.

16. A computer program product comprising a data carrier, stored on which is a computer program which can be loaded into the main memory of a mobile computer system and causes the computer system there to execute the following steps:
- receiving a notification of an existing risk of the infestation of a field with a harmful animal organism,
- indicating to a user a request for setting up one or more traps in the field,
- recording and storing the position of the mobile computer system together with the information that there is a trap at the position in the event that the user acknowledges to the computer program the setting up of a trap,
- receiving a notification to check a trap that has been set up,
- guiding the user to the trap to be checked on the basis of the stored position,
- indicating to the user a request for taking one or more digital images of the harmful organisms located in the trap,
- either transferring the digital image or images to a further computer system and receiving information about the number and species of harmful organisms identified, or analyzing the digital image or images and determining the number and species of harmful organisms located in the trap,
- indicating to the user information about the number and species of harmful organisms identified,
wherein a mobile computer system that has an image sensor and a GPS sensor is used for taking the digital images, the system being configured so as to assist a user in the creation of the digital images in such a way that it lets the user know by means of a signal when an imaging of the content of a trap depicted on the image sensor is suitable for the subsequent analysis for determining the number and species of the harmful organisms located in the trap, by analyzing whether the trap depicted on the image sensor is depicted sufficiently sharply over the entire region depicted and/or that no distortions occur in the imaging, and
wherein, apart from the digital images, items of information on the crop plant being cultivated at the location of the trap are used for determining the number and/or species of the harmful organisms located in a trap.

## Revendications

1. Procédé de détermination d'une infestation de plantes cultivées par des organismes nuisibles, comprenant les étapes suivantes :
(A) installation d'un ou plusieurs pièges pour les organismes nuisibles dans un champ dans lequel sont cultivées les plantes cultivées,
(B) détection de l'emplacement respectif du ou des plusieurs pièges,
(C) nouvelle recherche du ou des plusieurs pièges à l'aide de l'emplacement respectivement détecté,
(D) capture d'une ou plusieurs images numériques des organismes nuisibles qui se trouvent dans le ou les pièges,
(E) détermination automatique et comptage des organismes nuisibles qui se trouvent dans le ou les pièges,
(F) identification d'une ou plusieurs densités d'infestation des organismes nuisibles respectivement identifiés au niveau des emplacements détectés,
un système informatique mobile étant utilisé pour la capture des images numériques, lequel dispose d'un capteur d'images et d'un capteur GPS, et qui est configuré de telle sorte qu'il assiste un utilisateur lors de la création des images numériques en ce qu'il permet à l'utilisateur de reconnaître, au moyen d'un signal, quand une représentation du contenu du piège représentée sur le capteur d'images est appropriée pour l'analyse postérieure en vue de l'évaluation du nombre et de la nature des organismes nuisibles qui se trouvent dans le piège, ce en analysant si le piège représenté sur le capteur d'images est représenté avec suffisamment de netteté sur la totalité de la zone représentée et/ou si aucune déformation ne se produit dans la représentation, et
des informations relatives aux plantes cultivées qui sont cultivées à l'emplacement du piège étant utilisées en plus des images numériques pour la détermination du nombre et/ou de la nature des organismes nuisibles se trouvant dans le piège.

2. Procédé selon la revendication 1, un utilisateur utilisant un système informatique mobile qui dispose d'un capteur GPS pour la détection des emplacements des pièges installés.

3. Procédé selon la revendication 2, **caractérisé en ce que** l'utilisateur du système informatique mobile acquitte/confirme l'installation d'un piège **en ce**
- **qu'**il charge dans la mémoire de travail du système informatique mobile un code lisible par machine qui se trouve au niveau du piège ou sur celui-ci, ou
- qu'il crée un enregistrement numérique du piège installé à l'aide d'un capteur d'images qui est relié au système informatique mobile.

4. Procédé selon l'une des revendications 2 ou 3, **caractérisé en ce que** l'utilisateur, lors de la nouvelle recherche d'un piège installé, est guidé à l'emplacement du piège installé au moyen du système informatique mobile.

5. Procédé selon l'une des revendications 2 à 4, **caractérisé en ce que** l'enregistrement du fait que les pièges correspondants ont été contrôlés est effectué par la capture d'une ou plusieurs images numériques à l'étape (D) .

6. Procédé selon l'une des revendications 2 à 5, **caractérisé en ce que** les images capturées à l'étape (D) sont transmises à un système informatique supplémentaire, sur lequel les images sont analysées en vue d'évaluer le nombre et la nature des organismes nuisibles qui se trouvent dans un piège.

7. Procédé selon l'une des revendications 2 à 5, **caractérisé en ce que** les images capturées à l'étape (D) sont analysées sur le système informatique mobile en vue d'évaluer le nombre et la nature des organismes nuisibles qui se trouvent dans un piège.

8. Procédé selon l'une des revendications 1 à 7, **caractérisé en ce que** des informations relatives à l'emplacement d'un piège et à la saison durant laquelle les images numériques ont été générées sont utilisées en plus des images numériques pour la détermination du nombre et/ou de la nature des organismes nuisibles se trouvant dans le piège.

9. Procédé selon l'une des revendications 1 à 8, **caractérisé en ce qu'**un modèle de pronostic de prévision des infestations parasitaires est utilisé pour l'assistance.

10. Procédé selon l'une des revendications 1 à 9, **caractérisé en ce qu'**un réseau neuronal artificiel est employé pour l'identification des organismes nuisibles.

11. Procédé selon l'une des revendications 1 à 10, selon lequel
- un utilisateur reçoit, sur la base de calculs d'un modèle de pronostic pour l'infestation d'un champ avec un organisme nuisible, une notification qu'il existe un risque d'infestation dans un champ,
- l'utilisateur reçoit une invitation à installer dans le champ un ou plusieurs pièges pour l'organisme nuisible,
- l'utilisateur reçoit des informations à propos des lieux au niveau desquels devraient être installés les pièges, un risque d'infestation maximal ayant été prédit de préférence pour l'un des lieux,
- l'utilisateur installe un ou plusieurs pièges dans le champ,
- l'utilisateur acquitte/confirme l'installation du ou des plusieurs pièges au moyen d'un système informatique, moyennant quoi les positions géographiques des pièges installés sont mémorisées dans une mémoire à long terme d'un système informatique,
- l'utilisateur reçoit, à un instant après l'installation du ou des plusieurs pièges, une notification selon laquelle il doit contrôler les pièges installés,
- l'utilisateur est guidé vers les pièges installés par un système informatique mobile qui est équipé d'un capteur GPS,
- l'utilisateur crée une ou plusieurs images numériques des organismes nuisibles qui se trouvent dans les pièges à contrôler,
- le ou les plusieurs images numériques sont analysées par un système informatique, la nature et le nombre des organismes nuisibles qui se trouvent dans un piège représenté étant évalués,
- des informations à propos de la nature et du nombre des organismes nuisibles sont affichées à l'utilisateur au moyen du système informatique mobile.

12. Système de détermination d'une infestation de plantes cultivées par des organismes nuisibles, comprenant :
(a) un ou plusieurs pièges pour les organismes nuisibles,
(b) des moyens de détection d'un ou plusieurs emplacements auxquels a/ont été installé(s) le ou les plusieurs pièges,
(c) des moyens pour effectuer une nouvelle recherche du ou des plusieurs pièges installés,
(d) des moyens pour capturer une ou plusieurs images numériques des organismes nuisibles qui se trouvent dans le ou les pièges,
(e) des moyens d'identification des organismes nuisibles qui se trouvent dans le ou les pièges,
(f) des moyens de détermination de la quantité respective des organismes nuisibles identifiés,
(g) des moyens de détermination d'une densité d'infestation des organismes nuisibles identifiés au niveau des emplacements détectés,
un système informatique mobile étant utilisé pour la capture des images numériques, lequel dispose d'un capteur d'images et d'un capteur GPS, et qui est configuré de telle sorte qu'il assiste un utilisateur lors de la création des images numériques en ce qu'il permet à l'utilisateur de reconnaître, au moyen d'un signal, quand une représentation du contenu du piège représentée sur le capteur d'images est appropriée pour l'analyse postérieure en vue de l'évaluation du nombre et de la nature des organismes nuisibles qui se trouvent dans le piège, ce en analysant si le piège représenté sur le capteur d'images est représenté avec suffisamment de netteté sur la totalité de la zone représentée et/ou si aucune déformation ne se produit dans la représentation, et
des informations relatives aux plantes cultivées qui sont cultivées à l'emplacement du piège étant utilisées en plus des images numériques pour la détermination du nombre et/ou de la nature des organismes nuisibles se trouvant dans le piège.

13. Système selon la revendication 12, les aux points (a), (b), (c) et (d) désignant un système informatique mobile qui est équipé d'un capteur GPS et d'un capteur d'images.

14. Système selon la revendication 13, les moyens désignés aux points (e), (f) et (g) étant un système informatique fixe qui peut échanger des données avec le système informatique mobile, les systèmes informatiques étant aménagés de telle sorte que le système informatique mobile communique la ou les plusieurs images numériques au système informatique fixe et le système informatique fixe communique au système informatique mobile la quantité et la nature des organismes nuisibles identifiés.

15. Système selon l'une des revendications 12 à 14, comprenant un modèle de pronostic destiné à prédire un risque d'infestation pour un champ par un ou plusieurs organismes nuisibles.

16. Produit de programme informatique comprenant un support de données sur lequel est enregistré un programme informatique qui peut être chargé dans la mémoire de travail d'un système informatique mobile et y amène le système informatique à exécuter les étapes suivantes :
- réception d'une notification à propos d'un risque existant pour l'infestation d'un champ par un organisme nuisible animal,
- affichage à l'attention d'un utilisateur d'une invitation à installer un ou plusieurs pièges dans le champ,
- détection et mémorisation de la position du système informatique mobile conjointement avec l'information selon laquelle un piège se trouve à l'emplacement pour le cas où l'utilisateur acquitte l'installation d'un piège auprès du programme informatique,
- réception d'une notification de contrôler un piège installé,
- guidage de l'utilisateur vers le piège à contrôler à l'aide de la position mémorisée,
- affichage à l'attention d'un utilisateur d'une invitation à capturer une ou plusieurs images numériques des organismes nuisibles qui se trouvent dans le piège,
- soit transmission de la ou des images numériques à un système informatique supplémentaire et réception d'informations à propos du nombre et de la nature des organismes nuisibles identifiés, soit analyse de la ou des images numériques et détermination du nombre et de la nature des organismes nuisibles qui se trouvent dans le piège,
- affichage à l'attention d'un utilisateur d'informations à propos du nombre et de la nature des organismes nuisibles identifiés,
un système informatique mobile étant utilisé pour la capture des images numériques, lequel dispose d'un capteur d'images et d'un capteur GPS, et qui est configuré de telle sorte qu'il assiste un utilisateur lors de la création des images numériques en ce qu'il permet à l'utilisateur de reconnaître, au moyen d'un signal, quand une représentation du contenu du piège représentée sur le capteur d'images est appropriée pour l'analyse postérieure en vue de l'évaluation du nombre et de la nature des organismes nuisibles qui se trouvent dans le piège, ce en analysant si le piège représenté sur le capteur d'images est représenté avec suffisamment de netteté sur la totalité de la zone représentée et/ou si aucune déformation ne se produit dans la représentation, et
des informations relatives aux plantes cultivées qui sont cultivées à l'emplacement du piège étant utilisées en plus des images numériques pour la détermination du nombre et/ou de la nature des organismes nuisibles se trouvant dans le piège.
